# FASCICULE DE BREVET EUROPEEN

(11) **EP 2 978 583 B1**
(45) Date de publication et mention de la délivrance du brevet: **02.12.2020**
(21) Numéro de dépôt: 14713483.7
(22) Date de dépôt: 28.03.2014
(51) Int. Cl.: B29C 49/20, B29C 49/04

(54) **PROCÉDÉ POUR FABRIQUER UN RÉSERVOIR À CARBURANT OU UNE TUBULURE DE REMPLISSAGE ET LEUR UTILISATION DANS UN VÉHICULE HYBRIDE**
VERFAHREN ZUR HERSTELLUNG EINES KRAFTSTOFFTANKS ODER FÜLLROHRS UND VERWENDUNG DAVON IN EINEM HYBRIDFAHRZEUG
METHOD FOR MANUFACTUING A FUEL TANK OR FILLING PIPE AND USE THEREOF IN A HYBRID VEHICLE

(30) Priorité: 29.03.2013 FR 1352941
(43) Date de publication de la demande: 03.02.2016
(73) Titulaire: Plastic Omnium Advanced Innovation and Research, 1130 Bruxelles (BE)
(72) Inventeur: DE KEYZER, Pierre, B-1050 Bruxelles (BE); CRIEL, Bjorn, B-1750 Sint-martens-lennik (BE); BOUCAUX, Eric, F-60157 Elincourt Sainte Marguerite (FR)
(74) Mandataire: Remy, Vincent Noel Paul
(86) Numéro de dépôt international: PCT/EP2014/056375
(87) Numéro de publication internationale: WO 2014/154900

(56) Documents cités:
- EP-A1- 0 516 290
- EP-A2- 1 110 697
- DE-A1- 10 010 900
- DE-A1-102010 017 714
- FR-A1- 2 957 296
- US-A- 6 071 370
- US-A1- 2009 294 071

## Description

La présente invention concerne tout d'abord un procédé pour fabriquer un réservoir à carburant

On parle généralement de moteur hybride dans le cas de l'association d'un moteur thermique et d'un moteur électrique.

Il existe un principe général de fonctionnement pour les moteurs hybrides qui consiste à faire fonctionner soit le moteur électrique, soit le moteur thermique, soit les deux en même temps selon les modèles.

Un des principes particuliers est le suivant :
- lors des phases stationnaires (où le véhicule est immobile), les deux moteurs sont à l'arrêt ;
- au démarrage, c'est le moteur électrique qui assure la mise en mouvement de la voiture, jusqu'à des vitesses plus élevées (25 ou 30 km/h) ;
- lorsque des vitesses plus élevées sont atteintes, le moteur thermique prend le relais ;
- en cas de grande accélération, on observe la mise en marche des deux moteurs à la fois, qui permet d'avoir des accélérations équivalentes au moteur de même puissance, voire supérieures ;
- en phase de décélération et de freinage, l'énergie cinétique est utilisée pour recharger les batteries (à noter que cette fonctionnalité n'est pas disponible sur tous les moteurs hybrides disponibles sur le marché à l'heure actuelle).

Il résulte de ce principe que le moteur thermique ne fonctionne pas en permanence et que, dès lors, les phases de purge du canister (filtre à charbon actif qui évite de relarguer des vapeurs de carburant dans l'atmosphère) ne peuvent pas être assurées normalement puisque lors de celles-ci, de l'air éventuellement préchauffé est mis à circuler dans le canister pour le régénérer (c.à.d. pour désorber les vapeurs de carburant qui y sont adsorbées), cet air étant ensuite admis dans le moteur pour y être brûlé. En outre, les véhicules hybrides ont été développés pour réduire la consommation de carburant et les émissions des gaz d'échappement, ce qui rend la gestion moteur pour brûler les vapeurs de carburant venant du canister davantage complexe, voire impossible, sans détériorer les performances du moteur.

Dès lors, les réservoirs à carburant de ces moteurs sont généralement mis sous pression (typiquement, à une pression de l'ordre de 300 - 400 mbar) pour limiter la charge du canister, ce qui se fait généralement par un élément fonctionnel situé après les clapets de ventilation, appelés FTIV (Fuel Tank Isolation Valve). Cet élément comprend une soupape de sécurité (calibrée à la pression maximale d'utilisation du réservoir) et un pilotage électrique pour pouvoir mettre à pression atmosphérique le réservoir avant remplissage. Il en résulte que ces réservoirs doivent présenter, par rapport aux réservoirs à carburant des moteurs thermiques traditionnels, une résistance mécanique améliorée, en particulier dans le cas des réservoirs en matière plastique.

La solution actuellement sur le marché consiste en un réservoir métallique d'épaisseur importante, ce qui augmente considérablement le poids du réservoir et ainsi augmente la consommation de carburant et les émissions de gaz d'échappement.

D'autres solutions connues au problème de pression susmentionné peuvent consister en une augmentation de l'épaisseur de la paroi des réservoirs en plastique et/ou à l'utilisation de renforts internes (tiges, cloisons...) reliant les deux parois entre elles, mais ces solutions grèvent généralement le poids, réduisent le volume utile du réservoir et augmentent le coût du réservoir. Une autre solution peut consister à munir le réservoir de plots de recollement (c.à.d. de soudures locales de la paroi inférieure et de la paroi supérieure), mais cette solution entraîne une diminution du volume utile du réservoir Les documents EP 0 516 290 A1 et US 6 071 370 A divulguent respectivement un procédé de soudure d'un renfort fibreux lors d'une fabrication d'un objet choisi parmi l'ensemble constitué d'un réservoir et d'une tubulure de remplissage.

Une autre solution est celle décrite dans le brevet US 5,020,687 et qui consiste à fixer un tissu de fibres (sans matrice thermoplastique) de renfort sur la paroi externe du réservoir, cette fixation ayant lieu par surmoulage dudit tissu lors de la fabrication du réservoir par extrusion-soufflage, le tissu étant introduit dans le moule préalablement à l'introduction de la paraison qui, après soufflage, va donner le réservoir.

Cette solution présente toutefois, comme inconvénient majeur, que l'imprégnation des fibres de renfort du tissu est difficilement réalisable par la seule matière fondue issue de la paraison. Ceci peut se traduire par un défaut de fixation du renfort sur la paroi externe du réservoir.

La publication WO 2012/031705A2 envisage une alternative consistant à remplacer le tissu de fibres de renfort par un produit semi-fini composite contenant des fibres de renfort. Ce produit fini comprend des trous qui sont traversés par la matière fondue issue de la paraison pour assurer une fixation mécanique. Pour obtenir un ancrage mécanique efficace, il est nécessaire que la matière de la paraison flue à travers les trous en quantité suffisante pour former des sortes de rivets de l'autre côté du renfort. Cette technique de l'art antérieur peut être difficilement réalisable du fait de la viscosité de la paraison. Enfin, un autre inconvénient de cette technique connue réside dans le fait qu'il est nécessaire d'augmenter l'épaisseur du réservoir, et donc son poids et son coût.

La présente invention a dès lors pour objectif d'apporter une nouvelle solution de fixation d'un renfort fibreux à la paroi d'un réservoir, qui ne présente pas les inconvénients des solutions connues.

L'invention concerne également la fabrication des tubulures de remplissage.

Une tubulure de remplissage est un conduit permettant d'acheminer un liquide ou un gaz vers l'intérieur d'un réservoir.

Dans certains cas, une tubulure de remplissage peut être soumise à des projections de gravillons par les roues, nécessitant un écran de protection additionnel. Cet écran de protection peut être supprimé par l'ajout d'un renfort local sur la tubulure.

La solution de fixation proposée par l'invention peut être utilisée pour une tubulure de remplissage.

En outre, l'invention présente l'avantage supplémentaire qu'elle permet d'éviter toute opération de finition.

De plus, l'invention permet de réduire les couts de production, en procurant une diminution de la main d'œuvre et un raccourcissement du temps de cycle de la ligne de production.

L'invention a pour objet un procédé de soudure d'un renfort fibreux lors d'une objet choisi parmi l'ensemble constitué d'un fabrication d'un réservoir et d'une tubulure de remplissage selon la revendication 1.

L'invention apporte ainsi une nouvelle solution de fixation qui ne présente pas les inconvénients des solutions connues.

En outre, la liaison entre le renfort fibreux et la paroi, à savoir la soudure, est un mode de solidarisation qui ne fait appel à aucune retenue mécanique (à savoir, aucune forme tridimensionnelle qui serait en prise avec une autre forme tridimensionnelle complémentaire) mais procure une continuité de matière entre la paroi et le renfort, ce qui rend la liaison plus fiable que dans les solutions connues, tout en étant moins encombrante.

Dans la présente invention, la paroi est considérée comme se trouvant dans un état fondu si au moins la partie de celle-ci qui est destinée à être soudée au renfort fibreux est dans un état fondu. Le reste de la paroi peut donc être dans un état quelconque et notamment non fondu.

Dans une mise en œuvre préférée, on chauffe le renfort fibreux à l'aide d'un élément chauffant que l'on place devant le renfort pour le chauffer par rayonnement ou par contact.

Ce chauffage peut avoir lieu dans le moule, auquel cas l'élément chauffant doit être placé à proximité du renfort dans le moule, ou en dehors du moule.

Dans une mise en œuvre préférée, on chauffe le renfort fibreux en dehors du moule pour l'amener dans un état fondu, puis on l'introduit chauffé dans le moule.

Cette mise en forme préalable du renfort, ou préformage du renfort, peut s'opérer sur un support de préformage, après chauffage du renfort et avant son transfert dans le moule. La mise en forme peut aussi s'opérer dans le moule, après chauffage du renfort.

La mise en forme peut également être effectuée pendant le transfert du renfort vers le moule.

Le carburant auquel est destiné le réservoir selon l'invention peut être de l'essence, du diesel, un biocarburant... et peut avoir une teneur en alcool de 0 à 100%.

Selon l'invention, le réservoir ou la tubulure est en matière thermoplastique. Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les argiles, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé est le polyéthylène. D'excellents résultats ont été obtenus avec du polyéthylène haute densité (PEHD).

La paroi du réservoir ou de la tubulure peut être constituée d'une seule couche de matière thermoplastique ou de deux couches. Une ou plusieurs autres couches supplémentaires possibles peuvent, de manière avantageuse, être constituées de couches en matériau barrière aux liquides et/ou aux gaz. De préférence, la nature et l'épaisseur de la couche barrière sont choisies de manière à limiter au maximum la perméabilité des liquides et des gaz en contact avec la surface intérieure du réservoir ou de la tubulure. De préférence, cette couche est à base d'une résine barrière, c'est-à-dire d'une résine imperméable au carburant telle que l'EVOH par exemple (copolymère éthylène - acétate de vinyle partiellement hydrolysé). Alternativement, le réservoir ou la tubulure peut être soumis à un traitement de surface (fluoration ou sulfonation) ayant pour but de le rendre imperméable au carburant.

Le réservoir ou la tubulure selon l'invention comprend de préférence une couche barrière à base d'EVOH située entre des couches externes à base de PEHD.

Le renfort fibreux dont il est question dans la présente invention peut se présenter sous de nombreuses formes ; il s'agit généralement d'une plaque comprenant à la fois une matière thermoplastique et des fibres coupées ou des fibres longues ou des fibres continues qui peuvent ou non être tissées. De manière générale, les fibres coupées ont des longueurs finales de quelques dizaines/centaines de microns. Pour les fibres longues, les longueurs résiduelles sont de quelques millimètres. On parle de fibres continues ou de filaments continus dans le cas où la longueur des fibres utilisées est de plusieurs dizaines de centimètres. Les fibres tissées sont préférées. Ces fibres peuvent être à base de verre, de carbone, d'un polymère (tel qu'un polyamide, par exemple aromatique tels que aramide), voire être des fibres naturelles tel que le chanvre ou le sisal. Il s'agit de préférence de fibres de verre (de type E, S ou autre). Les fibres du renfort fibreux selon l'invention sont de préférence compatibles avec la matière thermoplastique et donc, généralement, compatibles avec les polyoléfines et en particulier, avec le PEHD. Afin d'obtenir cette compatibilité, on peut ensimer (traiter en surface) les fibres avec une substance compatibilisante telle qu'un silane. Un liant de type PEHD réactif peut également être utilisé. Dans ce cadre, des fonctions réactives de type anhydride maléique peuvent être avantageusement utilisées.

Selon l'invention, le renfort fibreux comprend une matière thermoplastique compatible avec celle du réservoir ou de la tubulure, voire identique à celle-ci. La compatibilité signifie que la matière thermoplastique du renfort fibreux et la matière thermoplastique du réservoir ou de la tubulure peuvent se souder entre elles lorsqu'elles sont mises en contact l'une avec l'autre alors qu'elles sont dans un état fondu. Dans le cas de réservoirs à carburant, il s'agit généralement de polyéthylène et en particulier de PEHD. La teneur en fibres dans le renfort est de préférence d'au plus 70%, de préférence d'au plus 50%, voire d'au plus 30%, le reste du renfort étant essentiellement constitué par de la matière thermoplastique. Autrement dit, la teneur en matière thermoplastique du renfort est d'au moins 30%, de préférence 50%, voire d'au moins 70%. La matière thermoplastique est de préférence fondue autour/dans la masse de fibres de manière à constituer une feuille ou une plaque homogène ayant, sur au moins une partie de sa surface, de la matière thermoplastique de sorte que la soudure est facilitée. En pratique, la production du renfort peut se faire par calandrage, moulage par compression, moulage par injection, moulage par projection, ou encore moulage sous. Selon une variante particulièrement préférée, le renfort couvre au moins une partie d'une zone où un composant est fixé (par exemple: la goulotte de remplissage où l'on vient fixer la tubulure de remplissage) et inclut une couche barrière de sorte qu'il remplit à la fois une fonction de renfort (dans cette zone souvent fragile) et une fonction d'imperméabilisation. Dans cette variante, le renfort est avantageusement obtenu par moulage par compression d'une feuille multicouche incluant une couche barrière (et de préférence, une feuille comprenant une couche d'EVOH entre deux couches de PEHD), d'un mat de fibres (de préférence : des fibres de verre continues non tissées et réparties de manière aléatoire) et d'une feuille en PEHD.

L'épaisseur du renfort est de préférence comprise entre 0.1 et 2 mm. Afin que le renfort soit mécaniquement efficace, son module est de préférence d'au moins 5000 MPa voire d'au moins 10000 MPa.

Ce renfort peut être combiné à d'autres techniques ou éléments de renforcement. Par exemple, une partie de paroi d'épaisseur plus importante et/ou comprise entre au moins deux éléments (accessoires) reliant les parties de paroi inférieure et supérieure du réservoir (c'est-à-dire respectivement celle constituant le fond et le toit du réservoir lorsque celui-ci est monté sur le véhicule). Ces éléments peuvent par exemple comprendre la partie de la face intérieure du réservoir substantiellement verticale lorsque celui-ci est monté sur le véhicule ; un module pompe-jauge; un plot de recollement («kiss point», ou soudure locale des parois inférieures et supérieures du réservoir), et en particulier, un des plots décrits dans la demande WO2011054709 au nom de la demanderesse et incorporée par référence dans la présente demande; et/ou un pilier de renforcement creux, intégrant éventuellement une fonction active tel que décrit dans la demande WO2010122065 au nom de la demanderesse et incorporée par référence dans la présente demande également.

Le moule utilisable pour la fabrication du réservoir ou de la tubulure conforme à l'invention peut être de toute nature, pour autant qu'il contribue à donner sa forme au réservoir ou à la tubulure.

Ce moule comprend avantageusement, à l'emplacement prévu pour le renfort préchauffé, des moyens de maintien du moule à une température suffisamment élevée pour éviter un refroidissement du renfort avant sa soudure à la feuille.

Le procédé selon l'invention peut alors inclure une étape de chauffage du renfort, exécutée entre le moment où le renfort est introduit dans le moule et le moment où il est soudé à la paroi.

Il peut s'agir d'un moule de soufflage donnant la forme d'au moins une partie du réservoir ou de la tubulure à une feuille ou d'un moule de post-soufflage conservant sa forme à une feuille préalablement mise en forme dans un moule de soufflage pendant son refroidissement sous la pression d'un gaz. Par feuille, on entend ici une préforme de matière thermoplastique fondue, généralement extrudée et ayant une forme cylindrique et/ou se présentant sous la forme de panneaux plans et/ou de moitiés de cylindre par exemple.

De préférence, le réservoir ou la tubulure est réalisé par co-extrusion-soufflage. Dans ce cas, on peut aussi bien utiliser une technique d'extrusion continue qu'une technique d'extrusion à accumulation ou une technique d'extrusion séquentielle, toutes techniques bien connues de l'homme du métier.

Selon l'invention, une fois le renfort soudé à la paroi du réservoir ou de la tubulure, on laisse le réservoir ou la tubulure refroidir et ce de préférence jusqu'à une température telle que la stabilité dimensionnelle de sa paroi est atteinte. Généralement, il s'agit substantiellement de la température ambiante, un conditionnement particulier n'étant pas nécessaire (à moins peut-être pour accélérer le refroidissement). Un avantage notable de l'invention est que la soudure du renfort sur la paroi du réservoir ou de la tubulure a lieu en ligne avec le moulage du réservoir ou de la tubulure, que ce soit pendant la mise en forme de la feuille par soufflage ou pendant le post-soufflage du réservoir ou de la tubulure, ce qui apporte une réduction du temps de cycle de production.

Selon l'invention, le renfort (et éventuellement, la surface de sa zone de soudure sur le réservoir ou sur la tubulure) est chauffé avant d'effectuer la soudure. A cet effet, on peut par exemple lui appliquer un rayonnement infrarouge ou laser ou un courant d'air chaud, voir un chauffage par miroir.

La température de chauffage va dépendre de la technique utilisée. Il est préférable que la température soit suffisamment élevée pour garantir la fusion de la matière thermoplastique (par exemple le PEHD). Il faut donc porter la matière thermoplastique à une température appropriée (pour le PEHD, supérieure à 135°C et de préférence supérieure à 150°C, voire à 180°C).

Un avantage de l'invention est que le renfort se soude à la paroi du réservoir ou de la tubulure alors que ladite paroi est encore chaude, en conséquence du procédé de fabrication du réservoir ou de la tubulure, c'est-à-dire soufflage d'une feuille ou post-soufflage du réservoir ou de la tubulure pour le ou la refroidir, sans nécessiter d'opération supplémentaire postérieure à ces étapes.

L'invention a également pour objet un procédé de fabrication d'un objet choisi parmi l'ensemble constitué d'un réservoir à carburant et d'une tubulure de remplissage, par exécution d'une étape d'introduction d'une feuille de matière thermoplastique se trouvant dans un état au moins partiellement fondu dans un moule de soufflage, d'une étape de conformation de la feuille à l'empreinte du moule par soufflage à l'aide d'un gaz de soufflage et d'une étape de démoulage de la feuille, l'objet comprenant une paroi en matière thermoplastique formée par ladite feuille et renforcée localement par un renfort fibreux comprenant à la fois une matière thermoplastique compatible avec celle de la feuille et des fibres coupées ou des fibres longues ou des fibres continues qui peuvent ou non être tissées, procédé caractérisé en ce qu'il comprend les étapes du procédé décrit ci-dessus de soudure du renfort fibreux à la feuille, le moule du procédé de soudure étant le moule de soufflage et la pression du gaz qui gonfle la paroi contre le moule pendant la soudure étant la pression du gaz de soufflage.

Grâce à l'invention, le procédé de fabrication de réservoir ou de tubulure intègre l'étape de soudure du renfort fibreux à la paroi du réservoir ou de la tubulure sans qu'il soit nécessaire de prévoir une opération de soudure séparée. L'opération de soufflage est mise à profit non seulement pour mettre en forme la feuille, comme cela est connu, mais aussi pour souder le renfort à la paroi du réservoir ou de la tubulure. La fixation par soudure du renfort à la paroi du réservoir ou de la tubulure procure en outre les avantages déjà indiqués, par comparaison à un accrochage mécanique.

Dans une variante avantageuse de ce procédé, on introduit le renfort fibreux dans le moule pour l'appliquer contre une face de la feuille opposée à la face intérieure du moule. En d'autres termes, le renfort se trouve sur la face de la feuille dirigée vers le futur intérieur du réservoir ou de la tubulure.

Dans une autre variante, on introduit le renfort fibreux dans le moule pour l'appliquer contre la face intérieure du moule. Dans ce cas, le renfort se trouve sur la face de la feuille dirigée vers le futur extérieur du réservoir ou de la tubulure.

Dans un mode de réalisation particulier du procédé de fabrication de réservoir, deux feuilles de matière thermoplastique se trouvant dans un état au moins partiellement fondu sont introduites dans un moule de soufflage constitué de deux demi-moules et d'un noyau séparant les deux demi-moules, une feuille étant introduite entre un premier demi-moule et le noyau, l'autre feuille étant introduite entre le second demi-moule et le noyau, le procédé comprenant en outre une étape de recollement entre elles des deux feuilles après leur conformation, par ouverture du moule, élimination du noyau d'entre les deux demi-moules et rapprochement des deux demi-moules l'un contre l'autre.

Il est courant pour l'homme du métier de désigner chacun des deux demi-moules par le mot « empreinte ». On utilise aussi le mot « coquille ».

Ce procédé est décrit dans la demande publiée de la demanderesse EP1110697 et procure notamment l'avantage de permettre l'intégration de différents composants à l'intérieur du réservoir, dès sa mise en forme par soufflage. Grâce à l'invention, on complète cet avantage par l'intégration d'un renfort fibreux sur la paroi du réservoir en profitant de la pression du gaz de soufflage et sans opération hors ligne de fabrication du réservoir.

Le noyau comprend alors des moyens mobiles de positionnement du renfort à proximité de la paroi intérieure du moule, permettant d'appliquer le renfort contre la feuille. Le renfort est donc appliqué contre la face de la feuille destinée à constituer la face intérieure du réservoir.

Dans une autre sous-variante, au lieu d'appliquer le renfort contre la feuille, on l'applique, toujours à l'aide du noyau, contre la surface interne d'un des demi-moules. La soudure entre le renfort préchauffé et la feuille se produit alors par compression du renfort entre la surface interne du demi-moule et la feuille, sous l'effet de la pression du gaz de soufflage.

L'invention concerne aussi un procédé de fabrication d'un objet choisi parmi l'ensemble constitué d'un réservoir à carburant et d'une tubulure de remplissage, par exécution d'une étape de démoulage d'une feuille se trouvant dans un état au moins partiellement fondu hors d'un moule de soufflage dans lequel elle a été conformée, d'une étape d'introduction de la feuille dans un moule de post-soufflage et d'une étape de gonflage de la feuille contre la paroi du moule de post-soufflage à l'aide d'un gaz de post-soufflage, l'objet comprenant une paroi en matière thermoplastique formée par ladite feuille et renforcée localement par un renfort fibreux comprenant à la fois une matière thermoplastique compatible avec celle de la feuille et des fibres coupées ou des fibres longues ou des fibres continues qui peuvent ou non être tissées, procédé caractérisé en ce qu'il comprend les étapes du procédé de soudure du renfort fibreux à la feuille décrit ci-dessus, le moule de soudure étant le moule de post-soufflage et la pression du gaz qui gonfle la paroi contre le moule étant la pression du gaz de post-soufflage.

Dans ce mode de réalisation de l'invention, on profite de la pression du gaz de post-soufflage pour souder le renfort fibreux à la paroi encore à l'état fondu du réservoir ou de la tubulure. L'opération est toujours réalisée en ligne, sans opération additionnelle sur le réservoir ou la tubulure, en dehors de sa chaine de fabrication.

Selon ces modes de réalisation de l'invention, la pression d'application du renfort contre la zone de soudure est donc exercée par contact mécanique direct (pression de contact) en recourant au gaz de soufflage ou de post-soufflage, qui est en général de l'air comprimé.

Le positionnement du renfort dans le moule peut être réalisé grâce à préhenseur de renfort fibreux comprenant à la fois une matière thermoplastique et des fibres coupées ou des fibres longues ou des fibres continues qui peuvent ou non être tissées, pour la fabrication de réservoirs à carburant ou de tubulures de remplissage comprenant une paroi en matière thermoplastique formée par ladite feuille et renforcée localement par un tel renfort fibreux dont la matière thermoplastique est compatible avec celle de la feuille, le préhenseur étant destiné à être déplacé par un robot ou par un vérin fixé sur un noyau du moule, le cas échéant, pour le positionnement du renfort fibreux dans le moule et étant équipé de moyens de retenue tels que par exemple des ventouses, de préférence métalliques, et de moyens de chauffage du renfort.

Le renfort positionné dans le moule peut y être maintenu en position par des moyens de maintien, par exemple des moyens d'aspiration à travers la paroi du moule.

Dans un mode de réalisation particulier de l'invention, on pourvoit la feuille d'au moins une zone résistante à la compression comprise au moins en partie dans la zone de soudure du renfort et ce, afin de pouvoir supporter l'effort lié à la pression exercée lors de la soudure.

La soudure du renfort sur le réservoir ou la tubulure ne doit pas forcément être réalisée sur toute sa surface. On peut par exemple souder les bords et quelques zones centrales uniquement. Toutefois, de façon avantageuse, la soudure a lieu sur substantiellement toute la surface, c'est-à-dire, au moins 90% de celle-ci, voire idéalement, 100%.

Selon la présente invention on préforme le renfort fibreux à une forme tridimensionnelle prédeterminée par un outil de mise en forme d'un renfort fibreux, comprenant un four pour chauffer ledit renfort à une température suffisante pour l'amener dans un état fondu, et une empreinte pour conformer le renfort à l'état fondu selon une forme tridimensionnelle prédéterminée.

Dans un mode de réalisation particulier, l'empreinte de l'outil de mise en forme comprend deux mâchoires pouvant s'écarter pour insertion du renfort et se rapprocher pour conformation du renfort, l'une de ces deux mâchoires étant mobile selon une direction donnée (non nécessairement rectiligne, par exemple circulaire) et munie de moyens de préhension du renfort conformé.

De préférence, les moyens de préhension sont munis d'un système d'aspiration d'air.

Dans une variante, les deux mâchoires de l'outil de mise en forme sont mobiles, une seule étant toutefois munie de moyens de préhension.

Dans un autre mode de réalisation, l'empreinte pour conformer le renfort à l'état fondu est un support, par exemple une grille, de la forme tridimensionnelle prédéterminée, sur laquelle le renfort repose sous son propre poids.

Dans un mode de réalisation particulier, l'une des deux mâchoires de l'empreinte de l'outil de mise en forme est constituée par un ensemble de plaques parallèles disposées perpendiculairement à la direction de rapprochement des deux mâchoires et présentant, en regard de l'autre mâchoire de l'empreinte, des bords formant une nappe de conformation du renfort. La nappe est proche de la forme finale qu'aura le renfort après moulage.

Une telle empreinte présente l'avantage que le four et l'outil de mise en forme peuvent être dissociés et que le renfort peut être transféré de l'un à l'autre en étant porté par une grille, dont le barreaux s'intercalent entre les plaques parallèles pour déposer ledit renfort sur la nappe formée par les bords desdits plaques parallèles.

Dans un mode de réalisation particulier, le four comprend des moyens permettant de chauffer le renfort sur ses deux faces.

La présente demande divulgue également un moule tel que décrit ci-dessus, dans toutes ses variantes et notamment un moule de soufflage constitué de deux demi-moules et d'un noyau séparant les deux demi-moules.

La divulgation concerne également un noyau d'un tel moule, comprenant des moyens mobiles de positionnement du renfort à proximité de la paroi intérieure du moule.

La présente divulgation concerne également un réservoir ou une tubulure susceptible d'être obtenu par un procédé tel que décrit ci-dessus et comprenant une paroi en matière thermoplastique et un renfort fibreux soudé sur au moins une partie de sa surface externe, ce renfort fibreux comprenant une matière plastique de même nature ou compatible avec celle de la surface externe du réservoir ou de la tubulure, et des fibres continues tissées. Il s'agit de préférence de fibres de verre telles que décrites précédemment. Les variantes préférées décrites plus haut dans le cadre du procédé selon l'invention s'appliquent au réservoir ou à la tubulure selon l'invention.

La présente divulgation concerne également l'utilisation d'un réservoir (obtenu par un procédé) tel que décrit ci-dessus comme réservoir à carburant d'un véhicule hybride. Ce réservoir peut également être utilisé sur un véhicule classique, où l'effet renforçant obtenu peut être mis à profit pour éviter le recours aux sangles métalliques généralement utilisées pour empêcher le fluage de la paroi inférieure du réservoir lorsque celui-ci est fixé au bas de caisse du véhicule. La présence du renfort pourrait également permettre de diminuer les épaisseurs du réservoir donnant lieu à une réduction du poids et une augmentation du volume utile. Dans le cas de la tubulure, la présence du renfort permet d'éviter l'ajout d'un écran anti-gravillons protecteur.

A noter également que l'effet renforçant obtenu par l'objet de la divulgation peut être combiné avec l'utilisation d'autres renforts connus tels que les sangles, les plots de recollement, les renforts internes (tiges, cloisons), les tissus surmoulés... susmentionnés et tout autre type de renfort tant interne qu'externe (d'autant plus que le premier type permet de contribuer à l'obtention d'une zone résistante à la compression). La combinaison de l'invention avec ces techniques connues, notamment des demandes WO2011054709 et WO2010122065, permettent de réduire la taille et/ou la quantité des plots de recollements, des renforts internes (tiges, cloisons), tissus surmoulés,... Ainsi le poids de la solution finale est minimal et le volume utile du réservoir maximal.

L'invention a aussi pour objet un procédé de fabrication d'un objet choisi parmi l'ensemble constitué d'un réservoir à carburant et d'une tubulure de remplissage, par exécution d'une étape d'introduction d'une feuille de matière thermoplastique se trouvant dans un état au moins partiellement fondu dans un moule de soufflage, d'une étape de conformation de la feuille à l'empreinte du moule par soufflage à l'aide d'un gaz de soufflage et d'une étape de démoulage de la feuille, l'objet comprenant une paroi en matière thermoplastique formée par ladite feuille et renforcée localement par un renfort fibreux comprenant à la fois une matière thermoplastique compatible avec celle de la feuille et des fibres coupées ou des fibres longues ou des fibres continues qui peuvent ou non être tissées, procédé caractérisé en ce qu'il comprend les étapes consistant à :
- introduire le renfort fibreux dans le moule de soufflage,
- chauffer le renfort fibreux pour l'amener dans un état fondu, cette étape étant exécutée avant, pendant ou après l'étape d'introduction,
- appliquer contre une face de la feuille opposée à l'empreinte du moule, le renfort fibreux chauffé introduit dans le moule,
- effectuer, dans le moule de soufflage, une soudure du renfort fibreux à la feuille se trouvant dans un état au moins partiellement fondu.

Dans un mode de réalisation particulier, l'application du renfort fibreux contre la face de la feuille opposée à l'empreinte du moule est effectuée à l'aide d'un élément mobile, porté par un robot externe au moule ou par un noyau du moule (lorsque le moule de soufflage est constitué de deux coquilles et d'un noyau séparant les deux demi-moules).

La présente invention est illustrée de manière non limitative par les figures ci-jointes, qui représentent de manière schématique :
- figure 1 : en coupe, un moule à deux coquilles en position ouverte,
- figure 2 : en coupe, le même moule en position fermée, avant soufflage d'une feuille,
- figure 3 : en coupe, le même moule en position fermée, après soufflage de la feuille,
- figure 4 : vue de dessus, une station de mise en forme d'un renfort fibreux,
- figures 5 et 6 : vue de dessus, un four de l'installation de la figure 4,
- figures 7 et 8 : vue en coupe selon VII-VII, un outil de mise en forme de la figure 4,
- figure 9 : une partie de l'outil de mise en forme des figures 7 et 8 pendant le transfert du renfort et sa mise en place dans un moule,
- figure 10 : en coupe, un moule à deux coquilles pendant une étape de positionnement et soudure d'un renfort fibreux par un élément mobile.

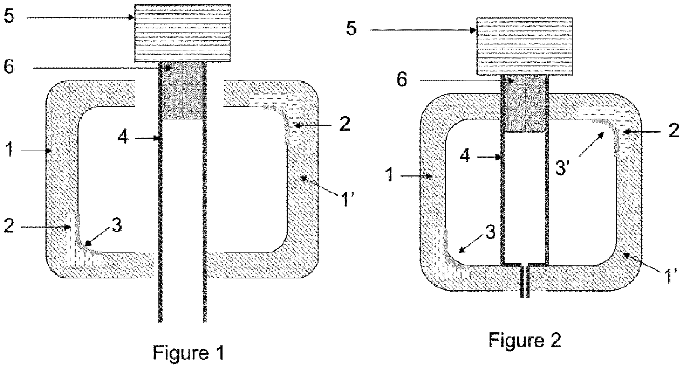

Sur la figure 1, on a représenté, en coupe verticale, deux coquilles 1 et 1' en vis-à-vis d'un moule ouvert pour la fabrication d'un réservoir à carburant.

Chaque coquille 1, 1' a ici une forme simple avec des parois planes et perpendiculaires, reliées par des congés, mais toute forme en creux est possible.

Comme cela est connu, une filière d'extrusion 5 munie d'un outil de formage 6 permet de produire une feuille ou paraison tubulaire 4 juste au-dessus du moule, alors que les deux coquilles 1, 1' sont écartées l'une de l'autre. A la place de la paraison tubulaire, on pourrait bien entendu utiliser deux paraisons planes, ou feuilles, par exemple selon le procédé décrit dans EP1110697.

Ici, les termes « planes » et « tubulaire » désignent des objets dont la forme est globalement et approximativement plane, respectivement tubulaire. Les conditions réelles d'extrusion de la feuille sont telles que celle-ci présente inévitablement des irrégularités de forme qui l'empêchent d'être rigoureusement de la forme géométrique visée.

On a préchauffé deux renforts 3 et 3' et on les a introduits dans le moule, en les plaçant l'un sur un congé de la surface interne d'une des coquilles 1', l'autre 3' sur une partie plane de la surface interne de l'autre coquille 1. La mise en place du renfort 3, sur une zone non plane, requiert la mise en forme de ce renfort. Cette mise en forme peut avoir eu lieu préalablement dans un outil de mise en forme ou être réalisée dans le moule, par application précise du renfort contre la paroi interne de la coquille, à l'emplacement approprié de cette coquille.

Quelle que soit la méthode de mise en forme du renfort 3, on a en outre prévu un moyen 2 de maintien en température de la partie de la coquille environnant la zone de positionnement de chaque renfort, pour que ces derniers ne se refroidissent pas trop vite au contact du moule. Il est en effet important, selon l'invention, qu'une soudure se produise entre chaque renfort 3 (respectivement 3') à l'état fondu et la paraison 4 qui est aussi à l'état fondu. Tout refroidissement prématuré du renfort nuirait à cette soudure. On peut éviter ce refroidissement prématuré de différentes manières, par exemple en prévoyant de tels moyens 2 de maintien en température ou en augmentant la température de chauffe du renfort de manière qu'il soit encore à l'état fondu lors de la soudure ou encore en réduisant le temps d'attente du renfort dans le moule avant la soudure. Une autre solution pourrait consister à approcher un élément chauffant près du renfort positionné dans le moule, pour le chauffer par rayonnement ou par contact avant l'opération de soudure.

On prévoit aussi un moyen de maintien en position de chaque renfort contre la paroi de la coquille. Ce moyen (non représenté), peut être une aspiration d'air à travers un canal prévu à cet effet dans la coquille ou encore un maintien mécanique (par exemple à l'aide de griffes ou de tiges, traversantes ou non), du bord externe ou du milieu du renfort.

On a également fait descendre une longueur de paraison 4 équivalente à la hauteur du moule, soit pendant la mise en position des renforts, soit avant, soit après.

On ferme ensuite le moule en rapprochant ses deux coquilles 1, 1' l'une de l'autre, comme on le voit sur la figure 2. La paraison se trouve pincée à son extrémité inférieure entre les deux coquilles et à la sortie de la tête d'extrusion 5 entre les deux coquilles et l'outil de formage 6.

On commence alors le soufflage de la paraison, en injectant en son intérieur de l'air sous une pression variant de 5 à 10 bars, selon les dimensions du moule.

La pression de l'air applique la paraison contre les parois des coquilles 1 et 1' et met la paraison à la géométrie du réservoir en cours de fabrication.

La pression de l'air a pour effet supplémentaire de plaquer la paraison à l'état fondu contre les renforts à l'état fondu maintenus dans le moule. Il en résulte une soudure des renforts sur la paraison.

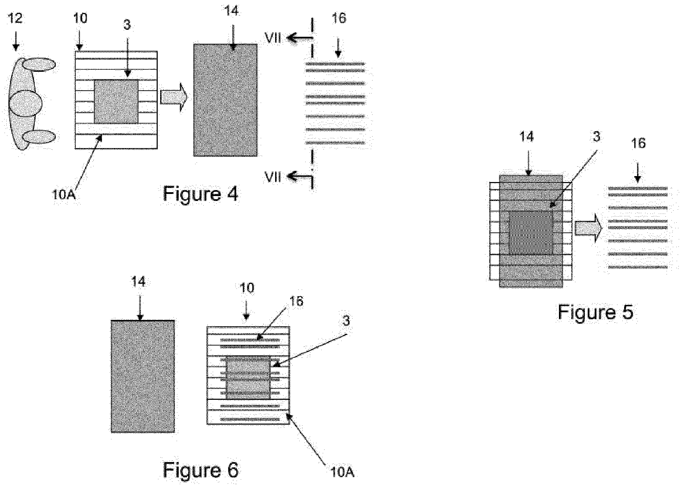

On va maintenant décrire, en référence aux figures 4 à 9, une station de chauffe utilisable pour préformer le renfort et un procédé de manipulation du renfort par préhenseur sous vide.

Les étapes du procédé sont les suivantes :
Figure 4 : Chargement du renfort 3 sur une grille 10 par un opérateur 12. Cette grille comprend une succession de barreaux métalliques 10A parallèles dans une seule direction. Elle est montée sur un rail (non représenté) et avance automatiquement vers un four 14 après chargement.

Les barreaux de la grille doivent permettre de soulever le renfort 3 par en-dessous. Pour ce faire, les barreaux doivent avoir un espacement approprié pour soutenir convenablement le renfort, y compris lorsqu'il aura atteint un état fondu.

Figure 5 : Chauffe du renfort dans le four 14. Préférentiellement : on chauffe les deux faces du renfort simultanément, pour réduire le temps de cycle.

A propos du four :
- L'utilisation de rubans métalliques chauffants émettant dans l'infrarouge en tant qu'élément chauffant du four donne de bons résultats. Cette utilisation n'est pas limitative. De plus, ces éléments chauffants ne sont pas sensibles aux vibrations et ont une durée de vie compatible avec l'application envisagée, à savoir la fabrication de réservoirs (estimée à 8000h en utilisation optimale selon le fabricant).
- Si nécessaire, la puissance de chauffe peut être régulée (pyromètre avec boucle de régulation) afin de réduire la sensibilité de la chauffe aux variations de température de l'atelier (courants d'air,...)

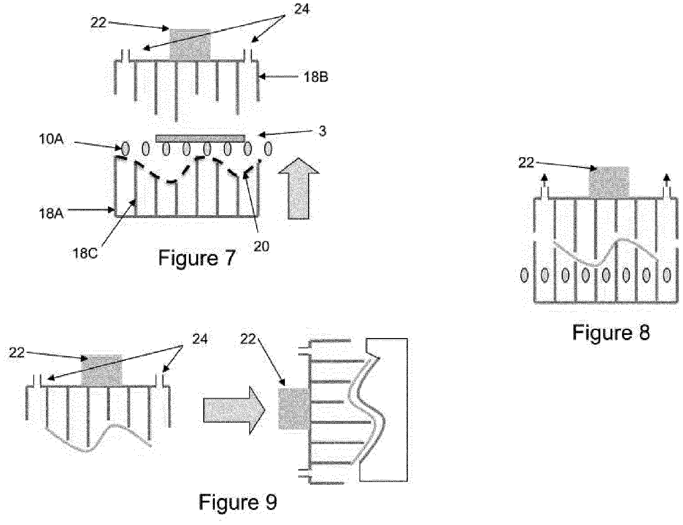

Figure 6 : Une fois la chauffe terminée, la grille sur laquelle se trouve le renfort ressort du four et se positionne dans une empreinte d'un outil de mise en forme 3D 16, pour conformer le renfort à l'état fondu selon une forme tridimensionnelle. La coquille de l'outil de mise en forme constitue un support de préformage et comprend deux mâchoires, une inférieure 18A, mobile verticalement, l'autre supérieure 18B, comme on le voit sur la figure 7.

Figure 7 : La mâchoire supérieure 18B remplit une deuxième fonction : elle est un préhenseur. Ce préhenseur 18B se place au-dessus du renfort.

Figure 8 : La mâchoire inférieure 18A vient appuyer sur la face inferieure du renfort et le comprime contre le préhenseur 18B. Cette opération conforme le renfort à la forme tridimensionnelle voulue.

La mâchoire inférieure 18A est constituée de plaques verticales 18C qui se glissent entre les barreaux 10A de la grille sur laquelle le renfort 3 repose. Les plaques ont des bords supérieurs formant une nappe (imaginaire et matérialisée sur la figure 7 par un trait 20 discontinu) qui coïncide avec la forme tridimensionnelle que l'on souhaite donner au renfort.

Préférentiellement, des tiges de maintien (non représentés) sont montées sur des vérins (non représentés) et évitent au renfort de glisser entre les mâchoires lorsqu'elles se referment, en le maintenant en place pendant cette fermeture. Dans le cas d'un renfort de dimensions340mmX109mm, deux vérins d'un diamètre de 3mm suffisent à assurer le maintien du positionnement. La course des vérins est ajustée de manière à appliquer une pression suffisante sur le renfort sans l'endommager. La localisation de ce maintien se situe préférentiellement dans la zone du premier contact pendant la fermeture des mâchoires.

Figure 9 : Prise du renfort conformé en trois dimensions par un robot 22 portant le préhenseur 18B sous vide partiel.

Le vide est préférentiellement obtenu par un système de type Venturi. Le niveau de vide est ajusté de manière à ne pas engendrer de déformation excessive du renfort. Les inventeurs ont observé qu'un vide de -266 mbar permet un maintien efficace du renfort sur le préhenseur.

On utilisera préférentiellement plusieurs orifices 24 pour la mise sous vide. En effet, l'utilisation d'un seul orifice engendre des flux d'airs qui refroidissement le renfort au voisinage de celui-ci.

Le préhenseur peut présenter un bord suivant la forme finale du renfort. Ce bord peut être matérialisé par une surface plate de quelques millimètres de large.

Ce bord peut être recouvert de PTFE (ou d'un autre revêtement antiadhésif) pour éviter un dépôt de matière fondue, qui pourrait se produire à la longue.

De plus, une régulation en température du préhenseur permet d'éviter un refroidissement trop rapide du renfort pendant le transfert vers le moule de soufflage. En particulier, un système de régulation à l'eau (ou à l'huile) ou par chauffeur électrique installé sur un élément métallique du préhenseur permet d'assurer un maintien efficace de la température du renfort fibreux.

Inversement, la régulation doit permettre d'éviter une montée en température du préhenseur, suite aux contacts répétés avec le renfort à l'état fondu. Une alternative consiste à placer le préhenseur sur une station de chauffe ou refroidissement pendant les phases d'attente. Toutefois, la régulation en température est moins aisée dans ce cas.

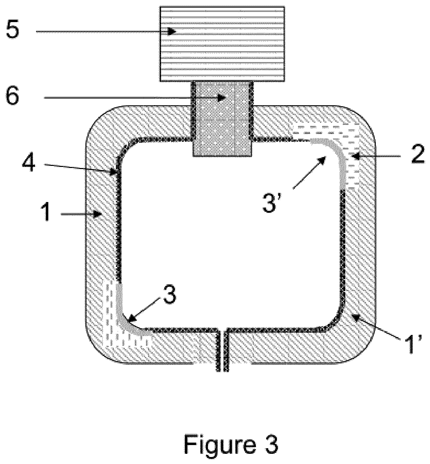

Comme déjà expliqué en référence aux figures 1 à 3, la surface du moule en contact avec le renfort peut être équipée de systèmes d'aspiration (type évents, non représentés).

La taille de ces évents doit être suffisamment petite pour empêcher le renfort de s'y introduire suite aux fortes pressions exercées durant le soufflage de la paraison contre le moule.

Préférentiellement, des tiges rétractables sont placées sur la surface du moule en contact avec le renfort. Ces tiges transpercent le renfort lors de son accostage à la surface du moule, ce qui aide au transfert du renfort entre le préhenseur et le moule.

Préférentiellement, une régulation en température spécifique (plus élevée que la température moyenne du moule) permet d'éviter un refroidissement trop rapide du renfort (par exemple : zone à 60°C, alors que le reste du moule est à 11°C).

Le robot place ainsi le renfort à la surface d'un moule de soufflage.

Au cours d'une étape suivante (non illustrée), on souffle le réservoir, ce qui provoque le surmoulage du renfort par contact et pression avec la paraison fondue.

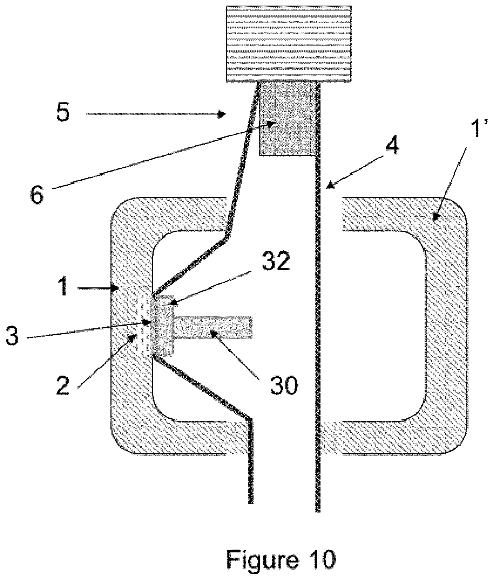

Dans le mode de réalisation de la figure 10, les deux mêmes coquilles 1 et 1' que précédemment sont représentées espacées l'une de l'autre, sous une tête d'extrusion 5 qui produit une feuille ou paraison tubulaire 4.

Les deux coquilles 1 et 1' servent à la mise en œuvre d'un procédé de fabrication d'un réservoir à carburant.

Selon ce procédé, la feuille 4 de matière thermoplastique sort de la tête d'extrusion 5 en se trouvant dans un état au moins partiellement fondu. Elle pénètre entre les deux coquilles 1 et 1', c'est-à-dire dans un moule de soufflage constitué de ces deux coquilles et éventuellement d'un noyau (non représenté).

La feuille 4 est destinée à être soufflée dans le moule de soufflage (lorsque les deux coquilles se seront rapprochées l'une de l'autre) par soufflage à l'aide d'un gaz de soufflage.

A l'étape représentée à la figure 10, ce soufflage n'a pas encore eu lieu.

Un renfort fibreux 3, comprenant à la fois une matière thermoplastique compatible avec celle de la feuille 4 et des fibres coupées ou des fibres longues ou des fibres continues qui peuvent ou non être tissées, est introduit dans le moule de soufflage à l'aide d'un élément mobile 30, qui peut être porté par un robot externe au moule (non représenté) ou par un noyau du moule (non représenté). L'élément mobile peut être par exemple un vérin fixé sur le noyau. L'élément mobile 30 se termine par une forme 32 qui est ici plane mais, plus généralement, est adaptée à la partie de la face intérieure de la coquille 1 contre laquelle la feuille 4 se trouvera appliquée sous la pression de ladite forme 32.

L'élément mobile comporte des moyens de préhension du renfort fibreux qui ne sont pas détaillés ici.

Dans le cas présent, on a préalablement chauffé le renfort fibreux pour l'amener dans le moule dans un état fondu. Cependant, ce chauffage pourrait avoir lieu pendant le transport du renfort 3 par l'élément mobile 30 ou avant ce transport. Un moyen 2 optionnel assure le maintien en température de la région de la coquille 1 voisine du renfort fibreux 3.

Comme on le voit sur la figure 10, l'élément mobile 30 a pour fonction d'appliquer le renfort 3 contre une face de la feuille 4 opposée à la face intérieure de la coquille 1.

Lors de cette application, le renfort fibreux 3 se soude à la feuille 4 qui se trouve dans un état au moins partiellement fondu.

La soudure peut être complète dès ce stade des opérations. Dans une variante, la soudure est parfaite par application de la pression du gaz de soufflage sur la feuille 4, lors de la conformation de cette dernière par soufflage contre les deux coquilles.

Dans une autre variante, compatible avec la précédente, l'application du renfort fibreux 3 contre la feuille 4 est réalisée après l'étape de soufflage de la feuille 4.
avoir lieu pendant le transport du renfort 3 par l'élément mobile 30 ou avant ce transport. Un moyen 2 optionnel assure le maintien en température de la région de la coquille 1 voisine du renfort fibreux 3.

Comme on le voit sur la figure 10, l'élément mobile 30 a pour fonction d'appliquer le renfort 3 contre une face de la feuille 4 opposée à la face intérieure de la coquille 1.

Lors de cette application, le renfort fibreux 3 se soude à la feuille 4 qui se trouve dans un état au moins partiellement fondu.

La soudure peut être complète dès ce stade des opérations. Dans une variante, la soudure est parfaite par application de la pression du gaz de soufflage sur la feuille 4, lors de la conformation de cette dernière par soufflage contre les deux coquilles.

Dans une autre variante, compatible avec la précédente, l'application du renfort fibreux 3 contre la feuille 4 est réalisée après l'étape de soufflage de la feuille 4.

## Revendications

1. Procédé de soudure d'un renfort fibreux (3, 3') lors d'une fabrication d'un objet choisi parmi l'ensemble constitué d'un réservoir et d'une tubulure de remplissage, ledit objet comprenant une paroi (4) en matière thermoplastique, le renfort fibreux (3, 3') comprenant à la fois une matière thermoplastique compatible avec celle de l'objet et des fibres coupées ou des fibres longues ou des fibres continues qui peuvent ou non être tissées, le procédé de soudure comprenant les étapes consistant à :
- chauffer le renfort fibreux (3, 3') pour l'amener dans un état fondu,
- effectuer, dans un moule (1, 1'), une soudure du renfort fibreux (3, 3') chauffé à la paroi (4) se trouvant dans un état au moins partiellement fondu, au moyen de la pression d'un gaz qui gonfle la paroi (4) contre le moule (1, 1'),
**caractérisé en ce que**
- on préforme le renfort fibreux (3, 3') à une forme tridimensionnelle prédéterminée, ce préformage étant au moins partiellement réalisé en dehors du moule à l'aide d'un outil de mise en forme comprenant un four pour chauffer ledit renfort à une température suffisante pour l'amener dans un état fondu, et une empreinte pour conformer le renfort à l'état fondu selon ladite forme tridimensionnelle prédéterminée.

2. Procédé selon la revendication 1, dans lequel l'objet est un réservoir à carburant.

3. Procédé selon la revendication 1, dans lequel l'objet est une tubulure de remplissage.

4. Procédé selon l'une des revendications précédentes, dans lequel on chauffe le renfort fibreux (3, 3') à l'aide d'un élément chauffant (14) que l'on place devant le renfort pour le chauffer par rayonnement, par convection ou par contact.

5. Procédé selon l'une des revendications précédentes, dans lequel on chauffe le renfort fibreux (3, 3') en dehors du moule pour l'amener dans un état fondu, puis on l'introduit chauffé dans le moule.

6. Procédé selon la revendication précédente, dans lequel on met en œuvre l'étape consistant à préformer le renfort fibreux (3, 3') sur un support de préformage (16) en dehors du moule, après chauffage du renfort (3, 3') et avant son transfert dans le moule (1, 1').

7. Procédé selon l'une quelconque des revendications précédentes, dans lequel la teneur en matière thermoplastique du renfort (3, 3') est d'au moins 30%, de préférence 50%, voire d'au moins 70%.

8. Procédé selon l'une des revendications précédentes, dans lequel on prévoit dans le moule (1, 1'), à l'emplacement prévu pour le renfort préchauffé (3, 3'), des moyens (2) de maintien du moule à une température suffisamment élevée pour éviter un refroidissement du renfort avant sa soudure à la feuille.

9. Procédé de fabrication d'un objet choisi parmi l'ensemble constitué d'un réservoir à carburant et d'une tubulure de remplissage, par exécution d'une étape d'introduction d'une feuille (4) de matière thermoplastique se trouvant dans un état au moins partiellement fondu dans un moule de soufflage (1, 1'), d'une étape de conformation de la feuille (4) à l'empreinte du moule (1, 1') par soufflage à l'aide d'un gaz de soufflage et d'une étape de démoulage de la feuille (4), l'objet comprenant une paroi en matière thermoplastique formée par ladite feuille (4) et renforcée localement par un renfort fibreux (3, 3 ') comprenant à la fois une matière thermoplastique compatible avec celle de la feuille et des fibres coupées ou des fibres longues ou des fibres continues qui peuvent ou non être tissées, procédé **caractérisé en ce qu'**il comprend les étapes du procédé selon l'une quelconque des revendications 1 à 6 de soudure du renfort fibreux (3, 3') à la feuille (4), le moule (1, 1') du procédé de soudure étant le moule de soufflage (1, 1') et la pression du gaz qui gonfle la paroi (4) contre le moule (1, 1') pendant la soudure étant la pression du gaz de soufflage.

10. Procédé selon la revendication précédente, dans lequel on introduit le renfort fibreux (3, 3') dans le moule (1, 1') pour l'appliquer contre une face de la feuille (4) opposée à la face intérieure du moule.

11. Procédé selon la revendication 9, dans lequel on introduit le renfort fibreux (3, 3') dans le moule pour l'appliquer contre la face intérieure du moule (1, 1').

12. Procédé selon l'une quelconque des revendication 9 à 11, dans lequel deux feuilles de matière thermoplastique se trouvant dans un état au moins partiellement fondu sont introduites dans un moule de soufflage constitué de deux demi-moules et d'un noyau séparant les deux demi-moules, une feuille étant introduite entre un premier demi-moule et le noyau, l'autre feuille étant introduite entre le second demi-moule et le noyau, le procédé comprenant en outre une étape de recollement entre elles des deux feuilles après leur conformation, par ouverture du moule, élimination du noyau d'entre les deux demi-moules et rapprochement des deux demi-moules l'un contre l'autre.

13. Procédé de fabrication d'un objet choisi parmi l'ensemble constitué d'un réservoir à carburant et d'une tubulure de remplissage, par exécution d'une étape de démoulage d'une feuille se trouvant dans un état au moins partiellement fondu hors d'un moule de soufflage dans lequel elle a été conformée, d'une étape d'introduction de la feuille dans un moule de post-soufflage, d'une étape de gonflage de la feuille contre la face intérieure du moule de post-soufflage à l'aide d'un gaz de post-soufflage, l'objet comprenant une paroi en matière thermoplastique formée par ladite feuille et renforcée localement par un renfort fibreux comprenant à la fois une matière thermoplastique compatible avec celle de la feuille et des fibres coupées ou des fibres longues ou des fibres continues qui peuvent ou non être tissées, procédé **caractérisé en ce qu'**il comprend les étapes du procédé de soudure du renfort fibreux à la feuille selon l'une quelconque des revendications 1 à 8, le moule de soudure étant le moule de post-soufflage et la pression du gaz qui gonfle la paroi contre le moule étant la pression du gaz de post-soufflage.

## Patentansprüche

1. Verfahren zum verschweißen einer Faserverstärkung (3, 3 ') während der Herstellung von einem Gegenstand ausgewählt aus der Gruppe bestehend aus einem Tank und einem Füllrohr, wobei der Gegenstand eine Wand (4) aus thermoplastischem Material umfasst, wobei die Faserverstärkung (3, 3') sowohl ein thermoplastisches Material, das mit dem des Objekts kompatibel ist, als auch geschnittene Fasern oder lange Fasern oder Endlosfasern, die gewebt sein können oder nicht, umfasst, wobei das Schweißverfahren die folgendenSchritte umfasst:
- der Faserverstärkung (3, 3') erhitzen, um sie in einen geschmolzenen Zustand zu bringen,
- in einer Form (1, 1'), das Schweißen der erwärmten Faserverstärkung (3, 3') an die Wand (4), die sich in einem zumindest teilweise geschmolzenen Zustand befindet, mittels des Drucks eines aufblasenden Gases, das die die Wand (4) gegen die Form (1, 1') aufbläst, durchführen
**dadurch gekennzeichnet**
- Die Faserverstärkung (3, 3') in einer vorbestimmten dreidimensionalen Form vorformt wird, wobei diese Vorformung zumindest teilweise außerhalb der Form unter Verwendung eines Formwerkzeugs durchgeführt wird, das einen Ofen zum Erhitzen der Verstärkung auf eine Temperatur umfasst, die ausreicht, um sie hineinzubringen einen geschmolzenen Zustand und einen Eindruck, um die Verstärkung im geschmolzenen Zustand in die dreidimensionale vorbestimmte Form zu bringen.

2. Verfahren nach Anspruch 1, wobei das Objekt ein Kraftstofftank ist.

3. Verfahren nach Anspruch 1, wobei das Objekt ein Füllrohr ist.

4. Verfahren nach einem der vorstehenden Ansprüche, wobei die Faserverstärkung (3, 3') mit Hilfe eines Heizelements (14) erwärmt wird, das vor der Verstärkung angeordnet wird, um diese durch Strahlung, Konvektion oder Kontakt zu erwärmen.

5. Verfahren nach einem der vorstehenden Ansprüche, wobei die Faserverstärkung (3, 3') außerhalb der Form erhitzt wird, um sie in einen geschmolzenen Zustand zu bringen, und dann erhitzt in die Form eingebracht wird.

6. Verfahren nach dem vorstehenden Anspruch, wobei man den Schritt des Vorformens der Faserverstärkung (3, 3') auf einem Vorformträger (16) außerhalb der Form nach Erwärmung der Verstärkung (3, 3') und vor ihrer Überführung in die Form (1, 1') durchführt.

7. Verfahren nach einem der vorstehenden Ansprüche, wobei der thermoplastische Gehalt der Verstärkung (3, 3') mindestens 30 %, vorzugsweise 50 %, oder mindestens 70 % beträgt.

8. Verfahren nach einem der vorstehenden Ansprüche, bei dem in der Form (1, 1') an der für die vorgewärmte Verstärkung (3, 3') vorgesehenen Stelle Mittel (2) vorgesehen sind, um die Form auf einer Temperatur zu halten, die ausreichend hoch ist, um ein Abkühlen der Verstärkung vor dem Verschweißen mit dem Blatt zu vermeiden.

9. Verfahren zur Herstellung eines Gegenstandes, ausgewählt aus der Gruppe bestehend aus einem Kraftstofftank und einem Füllrohr, durch Ausführen eines Schrittes des Einführens einem Blatt (4) aus thermoplastischem Material, das sich in einem zumindest teilweise geschmolzenen Zustand befindet, in eine Blasform (1, 1'), einen Schritt der Formung dem Blatt (4) zum Formhohlraum (1, 1') durch Blasen mit Hilfe eines Blasgases und einen Schritt der Entformung dem Blatt (4), wobei der Gegenstand eine Wand aus thermoplastischem Material aufweist, die durch das genannte Blatt (4) gebildet und lokal durch eine Faserverstärkung (3) verstärkt ist, 3'), das sowohl ein thermoplastisches Material, das mit dem der Folie kompatibel ist, als auch Stapelfasern oder lange Fasern oder Endlosfasern, die gewebt oder ungewebt sein können, umfaßt, **dadurch gekennzeichnet, daß** es die Verfahrensschritte nach einem der Ansprüche 1 bis 6 des Verschweißens der Faserverstärkung (3, 3') auf dias Blatt (4), wobei die Form (1, 1') des Schweißverfahrens die Blasform (1, 1') ist und der Druck des Gases, das die Wand (4) während des Schweißens gegen die Form (1, 1') drückt, der Druck des Blasgases ist.

10. Verfahren nach dem vorhergehenden Anspruch, wobei die Faserverstärkung (3, 3') in die Form (1, 1') eingeführt wird um sie gegen eine der Innenfläche der Form gegenüberliegende Fläche dem Blatt (4) zu drücken.

11. Verfahren nach Anspruch 9, wobei die Faserverstärkung (3, 3') in die Form eingeführt wird, um sie gegen die Innenfläche der Form (1, 1') zu drücken.

12. Verfahren nach einem der Ansprüche 9 bis 11, wobei zwei Blätter aus thermoplastischem Material in zumindest teilweise geschmolzenem Zustand in eine Blasform eingeführt werden, die aus zwei Formhälften und einem die beiden Formhälften trennenden Kern besteht, wobei ein Blatt zwischen eine erste Formhälfte und den Kern eingeführt wird, wobei das andere Blatt zwischen der zweiten Halbform und dem Kern eingeführt wird, wobei das Verfahren ferner einen Schritt des Wiederanhaftens der beiden Blätter nach ihrer Formgebung durch Öffnen der Form, Entfernen des Kerns aus dem Zwischenraum zwischen den beiden Halbformen und Zusammenbringen der beiden Halbformen umfasst.

13. Verfahren zur Herstellung eines Gegenstandes, ausgewählt aus der Gruppe bestehend aus einem Kraftstofftank und einem Einfüllrohr, durch Ausführen eines Schrittes des Entformens einem Blatt, die sich in einem zumindest teilweise geschmolzenen Zustand befindet, aus einer Blasform, in der sie geformt wurde, eines Schrittes des Einführens dem Blatt in eine Nachblasform, eines Schrittes des Aufblasens dem Blatt gegen die Innenfläche der Nachblasform mittels eines Nachblasgases, wobei der Gegenstand eine Wand aus thermoplastischem Material aufweist, die durch das genannte Blatt gebildet und lokal durch eine Faserverstärkung verstärkt ist, die sowohl ein thermoplastisches Material, das mit dem dem Blatt kompatibel ist, als auch geschnittene Fasern oder lange Fasern oder Endlosfasern, die gewebt oder ungewebt sein können, aufweist, wobei das Verfahren **dadurch gekennzeichnet ist, dass** es die Verfahrensschritte des Verschweißens der Faserverstärkung mit dem Blatt nach einem der Ansprüche 1 bis 8 umfasst, wobei die Schweißform die Nachblasform ist und der Druck des Gases, das die Wand gegen die Form aufbläst, der Druck des Nachblasgases ist.

## Claims

1. Welding process of a fibrous reinforcement (3, 3') during the manufacture of an object chosen from the group consisting of a tank and a filling pipe, said object comprising a wall (4) of thermoplastic material, the fibrous reinforcement (3, 3 ') comprising both a thermoplastic material compatible with that of the object and chopped fibers or long fibers or continuous fibers which may or may not be woven, the welding process comprising the steps consisting of:
- heating the fiber reinforcement (3, 3') to bring it into a molten state,
- performing, in a mold (1, 1'), a welding of the heated fibrous reinforcement (3, 3') to the wall (4) in an at least partially molten state, by means of the pressure of a gas that inflates the wall (4) against the mold (1, 1'),
**characterized in that**
- the fibrous reinforcement (3, 3 ') is preformed to a predetermined three-dimensional shape, this preforming being at least partially carried out outside the mold using a shaping tool comprising an oven for heating said reinforcement to a temperature sufficient to bring it into a molten state, and an impression to conform the reinforcement in the molten state into said three-dimensional predetermined shape.

2. The process of claim 1, wherein the object is a fuel tank.

3. The process of claim 1, wherein the object is a filling pipe.

4. Method according to one of the preceding claims, wherein the fibrous reinforcement (3, 3 ') is heated with a heating element (14) that is placed in front of the fibrous reinforcement to heat it by radiation, by convection or by contact.

5. Process according to one of the preceding claims, wherein the fibrous reinforcement (3, 3') is heated outside the mould to bring it into a molten state, then introduced heated into the mold.

6. Process according to the preceding claim, wherein the step consisting in preforming the fibrous reinforcement (3, 3') on a preforming support (16) outside the mold is performed, after heating of the reinforcement (3, 3') and before its transfer into the mold (1, 1').

7. Process according to any of the preceding claims, wherein the thermoplastics-material content of the fibrous reinforcement (3, 3') is at least 30%, preferably 50%, or at least 70%.

8. Process according to any of the preceding claims, wherein means (2) are provided in the mold (1, 1'), at the location intended for the preheated reinforcement (3, 3'), for keeping the mold at a temperature sufficiently high enough to prevent the fibrous reinforcement for cooling before it has become welded to the sheet.

9. Process of manufacturing an object chosen from the group consisting of a fuel tank and a filling pipe, by performing a step of introducing a sheet (4) of thermoplastic material in an at least partially molten state into a blow-molding mold (1, 1'), a step of shaping the sheet (4) to a cavity of the mold (1, 1') by blow-molding using a blow-molding gas and a step of demolding the sheet (4), the object comprising a wall of thermoplastic material formed by said sheet (4) and locally reinforced by a fibrous reinforcement (3, 3') comprising both a thermoplastic material compatible with that of the sheet and chopped fibres or long fibres or continuous fibres which may or may not be woven, **characterized in that** it comprises the steps of the process according to any of claims 1 to 6 of welding the fibrous reinforcement (3, 3') to the sheet (4), the mould (1, 1') of the welding process being the blow-molding mold (1, 1') and the pressure of the gas which inflates the wall (4) against the mold (1, 1') during welding being the pressure of the blow-molding gas.

10. Process according to the preceding claim, wherein the fibrous reinforcement (3, 3') is introduced into the mold (1, 1') to press it against a face of the sheet (4) opposite to the inner face of the mold.

11. Process according to claim 9, wherein the fibrous reinforcement (3, 3') is introduced into the mold to press it against the inner face of the mold (1, 1').

12. Process according to any one of claims 9 to 11, wherein two sheets of thermoplastic material in an at least partially molten state are introduced into a blow-molding mold consisting of two half-molds and of a core separating the two half-molds, one sheet being introduced between a first half-mold and the core, the other sheet being introduced between the second half-mold and the core, the process further comprising a step of bonding the two sheets together after their shaping, by opening the mold, removing the core from between the two half-molds and bringing the two half-molds back against one another.

13. Process of manufacturing an object chosen from the group consisting of a fuel tank and a filling pipe, by performing a step of demolding a sheet which is in an at least partially molten state from a blow mold in which it has been shaped, a step of introducing the sheet into a post-blowing mold, a step of inflating the sheet against the inner face of the post-blowing mold by means of a post-blowing gas, the object comprising a wall of thermoplastic material formed by said sheet and locally reinforced by a fibrous reinforcement comprising both a thermoplastic material compatible with the material of the sheet and chopped fibres or long fibres or continuous fibres which may or may not be woven, **characterized in that** it comprises the process steps of welding the fibrous reinforcement to the sheet according to any one of claims 1 to 8, the welding mold being the post-blowing mold and the pressure of the gas which inflates the wall against the mold being the pressure of the post-blowing gas.
